# EUROPÄISCHE PATENTSCHRIFT

(11) **EP 3 532 327 B1**
(45) Veröffentlichungstag und Bekanntmachung des Hinweises auf die Patenterteilung: **23.02.2022**
(21) Anmeldenummer: 17791343.1
(22) Anmeldetag: 24.10.2017
(51) Int. Cl.: B60K 6/48, B60K 6/547, B60K 6/36, F16H 3/089

(54) **HYBRIDANTRIEBSSTRANG FÜR EIN HYBRIDGETRIEBENES KRAFTFAHRZEUG**
HYBRID DRIVE TRAIN FOR A HYBRID-DRIVE MOTOR VEHICLE
GROUPE MOTOPROPULSEUR HYBRIDE D'UN VÉHICULE AUTOMOBILE À PROPULSION HYBRIDE

(30) Priorität: 26.10.2016 DE 102016221060
(43) Veröffentlichungstag der Anmeldung: 04.09.2019
(73) Patentinhaber: Audi AG, 85045 Ingolstadt (DE)
(72) Erfinder: HUMMEL, Steffen, 71287 Flacht (DE)
(86) Internationale Anmeldenummer: PCT/EP2017/077206
(87) Internationale Veröffentlichungsnummer: WO 2018/077904

(56) Entgegenhaltungen:
- WO-A1-2008/138387
- DE-A1- 10 329 109
- DE-A1- 19 745 995
- DE-A1-102013 210 013
- DE-T2- 60 212 220

## Beschreibung

Die Erfindung betrifft einen Hybridantriebsstrang für ein hybridgetriebenes Kraftfahrzeug nach dem Oberbegriff des Patentanspruches 1 oder des Patentanspruches 6.

Aus der EP 2 792 523 A2 ist ein Hybridantriebsstrang für ein hybridgetriebenes Fahrzeug bekannt. Dieser weist ein mittels Schaltelemente in unterschiedliche Übersetzungsstufen umschaltbares Getriebe auf, das über eine Brennkraftmaschinen-Welle mit einer Brennkraftmaschine, über eine Elektromaschinen-Welle mit einer Elektromaschine sowie über eine Ausgangswelle mit zumindest einer Fahrzeugachse trieblich verbindbar ist. Die Brennkraftmaschinen-Welle ist über, Radebenen bildende Stirnzahnradsätze mit einer Abtriebswelle verbindbar. Diese treibt wiederum über eine Stirnradstufe auf die Ausgangswelle ab. Die Radebenen des Hybridgetriebes weisen eine Hybrid-Radebene auf, die trieblich mit der Elektromaschinen-Welle verbunden ist.

Aus der DE 10 2013 210 013 A1 ist ein gattungsgemäßer Antriebsstrang für ein Fahrzeug sowie ein Verfahren zum Schalten eines solchen Antriebsstranges bekannt. Aus der DE 197 45 995 A1 ist eine getriebeintegrierte Elektromaschine für eine Kraftfahrzeug-Brennkraftmaschine bekannt. Aus der WO 2008/138387 A1 ist ein Verfahren zum Betrieb eines Hybridantriebssystems bekannt. Aus der DE 103 29 109 A1 ist eine Vorrichtung zur Übertragung von Antriebsleistung für ein Fahrzeug bekannt. Aus der DE 602 12 220 T2 ist eine Bewegungsübertragungsvorrichtung für Hybridfahrzeuge bekannt.

Die Aufgabe der Erfindung besteht darin, einen Hybridantriebsstrang bereitzustellen, der in einer im Vergleich zum Stand der Technik baulich einfachen, bauraumgünstigen Konstruktion größere Freiheitsgrade in der Funktionalität aufweist.

Die Aufgabe ist durch die Merkmale des Patentanspruches 1 oder 6 gelöst. Bevorzugte Weiterbildungen der Erfindung sind in den abhängigen Ansprüchen offenbart.

Erfindungsgemäß weisen die Radebenen V1 bis V4, E1, E2 eine erste und eine zweite Hybrid-Radebene E1, E2 auf. Diese sind zusätzlich mit der Elektromaschinen-Welle trieblich verbindbar und so ausgelegt, dass die Elektromaschine unter Bildung eines ersten Lastpfads L1 über die erste Hybrid-Radebene E1 mit der Brennkraftmaschine verbindbar ist. Alternativ dazu kann die Elektromaschine unter Bildung eines zweiten Lastpfads L2 mit der Brennkraftmaschine verbunden werden. Bei geschaltetem ersten oder zweiten Lastpfad L1, L2 ist die mit der Ausgangswelle verbundene Abtriebswelle vom jeweiligen Lastpfad L1, L2 entkoppelt.

Beispielhaft kann der erste Lastpfad L1 für einen Standlade-Betrieb ausgelegt sein, bei dem die Brennkraftmaschine in einer Momentenflußrichtung über die erste Hybrid-Radebene E1 mit der Elektromaschine verbunden ist. Die erste Hybrid-Radebene E1 ist dabei so ausgelegt, dass sich eine große Übersetzung von der Brennkraftmaschine zur Elektromaschine ergibt.

Demgegenüber kann der zweite Lastpfad L2 für einen Brennkraftmaschinen-Start ausgelegt sein, bei dem die Elektromaschine in einer Momentenflußrichtung über die zweite Hybrid-Radebene E2 mit der Brennkraftmaschine verbunden ist. Die zweite Hybrid-Radebene E2 ist dabei so ausgelegt, dass sich eine große Übersetzung von der Elektromaschine zur Brennkraftmaschine ergibt.

Zudem sind mittels der ersten und zweiten Hybrid-Radebenene E1, E2 elektromotorische Übersetzungsgänge mit einem hohen Drehmoment zum Anfahren sowie mit langen Übersetzungen für hohe Geschwindigkeiten bereitstellbar. Außerdem sind mittels der ersten und zweiten Hybrid-Radebenene E1, E2 elektromotorische Übersetzungsgänge für einen Boost-Betrieb von der Elektromaschine zum Fahrzeugrad sowie für einen Rekuperations-Betrieb vom Fahrzeugrad zur Elektromaschine bereitstellbar.

Erfindungsgemäß ist die jeweilige Hybrid-Radebene E1, E2 aus einem auf der Abtriebswelle angeordneten abtriebsseitigen Zahnrad, einem auf der Brennkraftmaschinen-Welle angeordneten antriebsseitigen Zahnrad und einem auf der Elektromaschinen-Welle angeordneten Zahnrad aufgebaut. Das auf der Elektromaschinen-Welle angeordnete Zahnrad ist als ein Loszahnrad auf der Elektromaschinen-Welle drehgelagert und mittels des Schaltelements SE-A von der Elektromaschinen-Welle abkoppelbar oder damit koppelbar.

Das auf der Elektromaschinen-Welle angeordnete Schaltelement SE-A kann beidseitig schaltbar sein und in Axialrichtung zwischen den Loszahnrädern der beiden Hybrid-Radebenen E1, E2 angeordnet sein. Das Schaltelement SE-A kann entweder in einer ersten Schaltstellung das Loszahnrad der ersten Hybrid-Radebene E1 mit der Elektromaschinen-Welle koppeln oder in einer zweiten Schaltstellung das Loszahnrad der zweiten Hybrid-Radebene E2 mit der Elektromaschinen-Welle koppeln.

Bevorzugt ist es, wenn die Elektromaschinen-Welle gänzlich frei von darauf drehfest angeordneten Festzahnrädern der Stirnzahnradsätze ist, die die Radebenen des Getriebes bilden.

Zudem ist es bevorzugt, wenn das Getriebe als ein reines Stirnradgetriebe, ausgelegt ist, bei dem die Brennkraftmaschinen-Welle, die Elektromaschinen-Welle und die Ausgangswelle ausschließlich über Stirnzahnradsätze miteinander trieblich verbindbar sind. Auf diese Weise wird eine einfach aufgebaute Getriebestruktur erzielt, die im Vergleich zu einem Planetengetriebe wesentlich effizienter betreibbar ist.

Erfindungsgemäß sind die beiden Hybrid-Radebenen in der Axialrichtung unmittelbar benachbart und zusammen zu einem gemeinsamen Teilgetriebe T zusammengefasst, das im Getriebe-Betrieb stillgelegt ist, das heißt vom Antriebsstrang abgekoppelt ist. Zur Realisierung eines solchen Teilgetriebes T weist jede der Hybrid-Radebenen E1, E2 jeweils ein auf der Abtriebswelle angeordnetes abtriebsseitiges Zahnrad auf, das als Loszahnrad ausgeführt ist und mittels eines Schaltelementes SE-B mit der Abtriebswelle koppelbar ist. Zudem sind auch die auf der Brennkraftmaschinen-Welle angeordneten antriebsseitigen Zahnräder der beiden Hybrid-Radebenen E1, E2 als Loszahnräder ausgeführt. Diese sind gemeinsam drehfest auf einer antriebsseitigen Hohlwelle angeordnet, die koaxial auf der Brennkraftmaschinen-Welle drehgelagert ist und über genau ein Schaltelement, nämlich SE-C, mit der Brennkraftmaschinen-Welle koppelbar ist. Das oben erwähnte, auf der Abtriebswelle angeordnete Schaltelement SE-B kann beidseitig schaltbar ausgeführt sein und in Axialrichtung zwischen den abtriebsseitigen Loszahnrädern der beiden Hybrid-Radebenen E1, E2 angeordnet sein.

Alternativ dazu ist die jeweilige Hybrid-Radebene E1, E2 zusammen mit einer weiteren Radebene V3, V4 zu einem ersten und zu einem zweiten Teilgetriebe T1, T2 zusammengefasst. Die ersten und zweiten Teilgetriebe T1, T2 sind im Getriebe-Betrieb deaktivierbar, das heißt vom Antriebsstrang abkoppelbar oder stilllegbar. Die oben erwähnte weitere Radebene ist im Gegensatz zur jeweiligen Hybrid-Radebene E1, E2 gegenüber der Elektromaschinen-Welle anbindungsfrei und weist ein auf der Abtriebswelle drehgelagertes abtriebsseitiges Loszahnrad auf, das mittels eines Schaltelementes SE-D, SE-E mit der Abtriebswelle koppelbar ist. Bevorzugt ist es, wenn das auf der Abtriebswelle angeordnete Schaltelement SE-D, SEE beidseitig schaltbar ist und in der Axialrichtung zwischen den auf der Abtriebswelle drehgelagerten abtriebsseitigen Loszahnrädern der Hybrid-Radebene E1, E2 und der weiteren Radebene V3, V4 angeordnet ist.

Die oben erwähnte weitere Radebene V3, V4 weisen zudem ein auf der Brennkraftmaschinen-Welle drehgelagertes antriebsseitiges Loszahnrad auf. Dieses ist mittels eines Schaltelementes SE-F mit der Brennkraftmaschinen-Welle koppelbar. Die auf der Brennkraftmaschinen-Welle drehgelagerten antriebsseitigen Loszahnräder der jeweiligen Hybrid-Radebene E1, E2 und der weiteren Radebene V3, V4 sind auf einer gemeinsamen antriebsseitigen Hohlwelle drehfest angeordnet, die auf der Brennkraftmaschinen-Welle koaxial drehgelagert sind und über genau ein Schaltelement SE-F mit der Brennkraftmaschinen-Welle koppelbar ist.

Bevorzugt kann das auf der Brennkraftmaschinen-Welle angeordnete Schaltelement SE-F beidseitig schaltbar sein und in Axialrichtung zwischen den antriebsseitigen Hohlwellen der beiden Teilgetriebe T1, T2 angeordnet sein.

Das auf der Elektromaschinen-Welle angeordnete Schaltelement kann beliebig realisiert sein, zum Beispiel als eine lastschaltbare Freikupplung in Kombination mit einer Kupplung, als eine lastschaltbare Doppelkupplung oder als eine nicht lastschaltbare Doppelsynchronisierung. Zudem kann die Elektromaschine antriebsseitig oder abtriebsseitig im Getriebe angebunden sein. Bei einer antriebsseitigen Anbindung kann das auf der Elektromaschinen-Welle angeordnete Zahnrad der Hybrid-Radebene E1, E2 mit einem auf der Brennkraftmaschinen-Welle drehgelagerten antriebsseitigen Loszahnrad kämmen. Bei einer abtriebsseitigen Anbindung kann das auf der Elektromaschinen-Welle angeordnete Zahnrad der Hybrid-Radebene E1, E2 mit einem auf der Abtriebswelle drehgelagerten abtriebsseitigen Loszahnrad kämmen.

Das obige Hybridkonzept kann aufbauend auf einem herkömmlichen Handschaltgetriebe in einfacher Weise realisiert werden und speziell für den Frontantrieb genutzt werden. Die Hinterachse kann gegebenenfalls mechanisch entkoppelt von der Vorderachse sein, jedoch über separate Elektromaschinen antreibbar ist, um einen Vierradantrieb zu realisieren. Im obigen Hybridkonzept kann die Elektromaschine bevorzugt am Getriebeende positioniert sein.

Die Erfindung und ihre vorteilhaften Aus- und Weiterbildungen sowie deren Vorteile werden nachfolgend anhand von Zeichnungen näher erläutert.

Es zeigen:
- Figur 1: eine Getriebestruktur eines als Stirnrad-Handschaltgetriebe ausgeführten Hybridgetriebes;
- Figur 2: in einer Ansicht entsprechend der Figur 1 ein zweites Ausführungsbeispiel des Hybridgetriebes; und
- Figuren 3 und 4: jeweils eine Abwandlung der Figur 2.

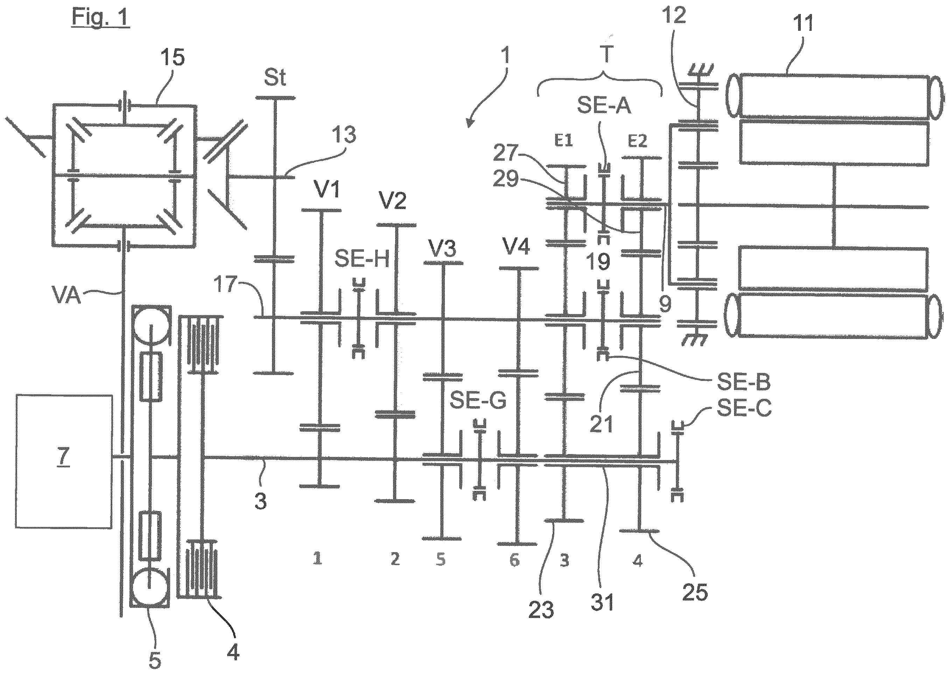

In der Figur 1 ist ein Handschaltgetriebe 1 gezeigt, das Bestandteil eines Hybridantriebsstranges eines nicht dargestellten hybridgetriebenen Kraftfahrzeugs ist. Das mittels Schaltelemente in unterschiedliche Übersetzungsstufen umschaltbare Getriebe 1 ist über eine Brennkraftmaschinen-Welle 3 mit zwischengeschalteter Trennkupplung 4 und Torsionsdämpfer 5 mit einer Brennkraftmaschine 7 verbunden sowie über eine Elektromaschinen-Welle 9 mit einer Elektromaschine 11 verbunden. Die Elektromaschine 11 kann für eine Drehmomentwandlung ein in der Figur 1 dargestelltes Planeten-Vorgelege 12 aufweisen. Zudem ist das Getriebe 1 ausgangsseitig über eine Ausgangswelle 13 mit einer Vorderachse VA des Kraftfahrzeugs trieblich verbunden. Die Ausgangswelle 13 steht als Ritzelwelle mit dem Kegeltrieb eines Vorderachsdifferenzials 15 in Wirkverbindung.

Wie aus der Figur 1 weiter hervorgeht, sind die Brennkraftmaschinen-Welle 3, die Elektromaschinen-Welle 9 sowie eine zwischengeordnete Abtriebswelle 17 zueinander achsparallel angeordnet. Die Abtriebswelle 17, die Elektromaschinen-Welle 9 sowie die Ausgangswelle 13 sind über Stirnzahnradsätze miteinander trieblich verbindbar, die über die Schaltelemente schaltbar sind. Die Stirnzahnradsätze bilden zueinander parallel angeordnete Radebenen V1 bis V4 und E1 sowie E2, die sich gemäß der Figur 1 in der Axialrichtung allesamt zwischen der Brennkraftmaschine 7 und der Elektromaschine 11 befinden.

Nachfolgend ist die in der Figur 1 gezeigte Getriebestruktur des Hybridgetriebes 1 beschrieben: So sind in der Figur 1 die Brennkraftmaschinen-Welle 3 und die Abtriebswelle 17 über Radebenen V1 bis V4 miteinander verbunden, die jeweils aus miteinander kämmenden Los- und Festzahnrädern aufgebaut sind. Die Loszahnräder der Radebenen V1 bis V4 sind über Schaltelemente SE-H und SE-G mit der jeweils tragenden Welle 3, 17 koppelbar. Die Radebenen V1 bis V4 sind anbindungsfrei gegenüber der Elektromaschinen-Welle 9.

Zudem sind zwei Hybrid-Radebenen E1, E2 vorgesehen. Jede Hybrid-Radebene E1, E2 weist ein auf der Abtriebswelle 17 angeordnetes abtriebsseitiges Zahnrad 19, 21 auf, das jeweils mit einem auf der Brennkraftmaschinen-Welle 3 angeordneten antriebsseitigen Zahnrad 23, 25 und mit jeweils einem koaxial zur Elektromaschinen-Welle 9 angeordneten (elektromaschinenseitigen) Loszahnrad 27, 29 kämmt. Die antriebsseitige Zahnräder 23, 25 der Hybrid-Radebenen E1, E2 sind als Loszahnräder auf der Brennkraftmaschinen-Welle 3 drehgelagert. Zwischen den elektromaschinenseitigen Loszahnrädern 27, 29 der Hybrid-Radebenen E1, E2 ist ein beidseitig schaltbares Schaltelement SE-A angeordnet, mit dem entweder die erste Hybrid-Radebene E1 oder die zweite Hybrid-Radebene E2 mit der Elektromaschinen-Welle 9 koppelbar ist. Die Abtriebswelle 17 treibt über eine Stirnradstufe St auf die Ausgangswelle 13 ab.

In der in der Figur 1 gezeigten Neutralstellung des Schaltelements SE-A ist die Elektromaschinen-Welle 9 vom Antriebsstrang abgekoppelt. Auf diese Weise ist die Elektromaschinen-Welle 9 im Getriebe-Betrieb stillgelegt, d.h. deaktiviert. Dadurch reduziert sich vorteilhaft das Trägheitsmoment des verbleibenden aktivierten Getriebes. Die Zahnräder der Hybrid-Radebenen E1, E2 bleiben jedoch aktiviert, d.h. diese werden trotz stillgelegter Elektromaschine 11 im Getriebe-Betrieb mitgedreht.

In der Figur 1 sind die beiden Hybrid-Radebenen E1, E2 zu einem gemeinsamen Teilgetriebe T zusammengefasst, das im Getriebe-Betrieb komplett momentenfrei schaltbar ist, das heißt vom Antriebsstrang komplett abkoppelbar ist, so dass das Teilgetriebe T vollständig stillgelegt ist. Zur Realisierung des Teilgetriebes T sind in der Figur 1 die beiden abtriebsseitigen Zahnräder 19, 21 der Hybrid-Radebenen E1, E2 als Loszahnräder auf der Abtriebswelle 17 drehgelagert. Zwischen den beiden abtriebsseitigen Zahnrädern 19, 21 der Hybrid-Radebenen E1 und E2 ist ein Schaltelement SE-B angeordnet, das beidseitig schaltbar ist und entweder die erste oder die zweite Hybrid-Radebene E1, E2 mit der Abtriebswelle koppeln kann. Zudem sind in der Figur 1 die beiden antriebsseitigen Loszahnräder 23, 25 der Hybrid-Radebenen E1, E2 gemeinsam auf einer antriebsseitigen Hohlwelle 31 drehfest angeordnet, die koaxial auf der Brennkraftmaschinen-Welle 3 drehgelagert ist. Die antriebsseitige Hohlwelle 31 ist in bauteilreduzierter Weise über genau ein Schaltelement SE-C mit der Brennkraftmaschinen-Welle 3 koppelbar.

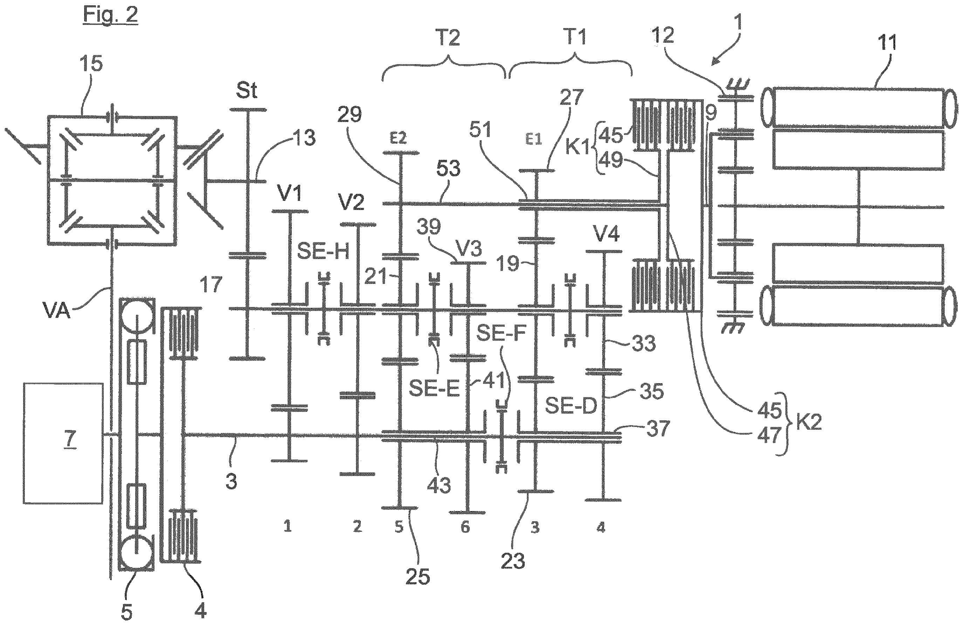

In der Figur 2 sind im Unterschied zur Figur 1 insgesamt zwei Teilgetriebe T1, T2 bereitgestellt, die im Getriebe-Betrieb jeweils komplett momentenfrei schaltbar sind, das heißt vom Antriebsstrang komplett abkoppelbar sind, so dass das erste Teilgetriebe T1 und/oder das zweite Teilgetriebe T2 vollständig stillgelegt ist. Im ersten Teilgetriebe T1 sind die erste Hybrid-Radebene E1 und eine weitere, unmittelbar axial benachbarte Radebene V4 zusammengefasst. Im zweiten Teilgetriebe T2 sind die zweite Hybrid-Radebene E2 sowie eine unmittelbar benachbarte weitere Radebene V3 miteinander zusammengefasst.

Im ersten Teilgetriebe T1 weist die Radebene V4 ein auf der Abtriebswelle 17 drehgelagertes abtriebsseitiges Loszahnrad 33 auf. Das abtriebsseitige Loszahnrad 33 der Radebene V4 und das abtriebsseitige Loszahnrad 19 der ersten Hybrid-Radebene E1 können über ein dazwischen angeordnetes beidseitig schaltbares Schaltelement SE-D alternierend mit der Abtriebswelle 17 gekoppelt werden. Sowohl die erste Hybrid-Radebene E1 als auch die Radebene V4 weisen auf der Brennkraftmaschinen-Welle 3 drehgelagerte antriebsseitige Loszahnräder 23, 35 auf, die gemeinsam drehfest auf einer antriebsseitigen ersten Hohlwelle 37 angeordnet sind. Diese ist auf der Brennkraftmaschinen-Welle 3 koaxial drehgelagert und über ein Schaltelement SE-F mit der Brennkraftmaschinen-Welle 3 koppelbar.

Das zweite Teilgetriebe T2 ist baugleich wie das erste Teilgetriebe T1 aufgebaut. Im zweiten Teilgetriebe T2 weist die Radebene V3 ein auf der Abtriebswelle 17 drehgelagertes abtriebsseitiges Loszahnrad 39 auf. Das abtriebsseitige Loszahnrad 39 der Radebene V3 und das abtriebsseitige Loszahnrad 21 der zweiten Hybrid-Radebene E2 können über ein dazwischen angeordnetes beidseitig schaltbares Schaltelement SE-E alternierend mit der Abtriebswelle 17 gekoppelt werden. Sowohl die zweite Hybrid-Radebene E2 als auch die Radebene V3 weisen auf der Brennkraftmaschinen-Welle 3 drehgelagerte antriebsseitige Loszahnräder 25, 41 auf, die gemeinsam drehfest auf einer antriebsseitigen zweiten Hohlwelle 43 angeordnet sind, die auf der Brennkraftmaschinen-Welle 3 koaxial drehgelagert ist und über das Schaltelement SE-F mit der Brennkraftmaschinen-Welle 3 koppelbar ist. Das für die beiden Hohlwellen 37, 43 gemeinsame Schaltelement SE-F ist beidseitig schaltbar und zwischen den beiden antriebsseitigen Hohlwellen 37, 43 angeordnet.

Wie aus der Figur 2 weiter hervorgeht, werden die beiden elektromaschinenseitigen Zahnräder 27, 29 der Hybrid-Radebenen E1, E2 über eine Doppelkupplung geschaltet, die aus einer ersten Kupplung K1 und einer zweiten Kupplung K2 aufgebaut ist. Die Doppelkupplung weist einen Außenlamellenträger 45 auf, der drehfest an der Elektromaschinen-Welle 9 angebunden ist. Der Außenlamellenträger 45 wirkt mit zwei in Axialrichtung nebeneinander angeordneten Innenlamellenträger 47, 49 zusammen. Der Innenlamellenträger 49 ist zusammen mit dem elektromaschinenseitigen Zahnrad 27 der ersten Hybrid-Radebene E1 drehfest auf einer Hohlwelle 51 angeordnet. Demgegenüber ist der Innenlamellenträger 47 zusammen mit dem Zahnrad 29 der zweiten Hybrid-Radebene E2 drehfest auf einer Vollwelle 53 angeordnet, die sich koaxial durch die Hohlwelle 51 erstreckt.

Das in der Figur 2 gezeigte Getriebe 1 weist insgesamt 16 Zahnräder, vier Synchronisierungen sowie zwei Kupplungen K1, K2 auf. In dem Getriebe 1 sind bis zu zehn verbrennungsmotorische Gänge schaltbar, das heißt die nachfolgend erläuterten sechs verbrennungsmotorischen Direkt-Gänge VM1 bis VM6, die lediglich eine Radebene nutzen, sowie die vier Verwindungs-Gänge VM7 bis VM10, die zumindest zwei Radebenen nutzen:
In den Direkt-Gängen VM1 und VM2 ist das Schaltelement SE-H nach links bzw. nach rechts geschaltet, während die beiden Teilgetriebe T1, T2 stillgelegt sind.

Im Direkt-Gang VM3 ist SE-F nach rechts und SE-D nach links geschaltet. Das heißt, dass das Teilgetriebe T1 aktiviert ist und das Teilgetriebe T2 deaktiviert ist. Gleiches trifft auch für den Direkt-Gang VM4 zu, bei dem SE-F nach rechts und SE-D ebenfalls nach rechts geschaltet sind.

In den folgenden Direkt-Gängen VM5 und VM6 ist das Teilgetriebe T2 aktiviert und das Teilgetriebe T1 deaktiviert. Beim Direkt-Gang VM5 ist SE-F nach links und SE-E nach links geschaltet. Beim Direkt-Gang VM6 ist SE-F nach links und SE-E nach rechts geschaltet.

Von den folgenden vier verbrennungsmotorischen Verwindungs-Gängen VM7 bis VM10 ist im Gang VM7 das Schaltelement SE-F nach rechts geschaltet, die Kupplungen K1 und K2 betätigt und das Schaltelement SE-E nach links geschaltet. Beim Verwindungs-Gang VM8 sind SE-F nach rechts geschaltet, die beiden Kupplungen K1, K2 betätigt und SE-E nach rechts geschaltet. Im Verwindungs-Gang VM9 sind SE-F nach links geschaltet, die beiden Kupplungen K1, K2 betätigt und SE-D nach links geschaltet. Im Verwindungs-Gang VM10 sind SE-F nach links geschaltet, die beiden Kupplungen K1, K2 betätigt und SE-D nach rechts geschaltet.

Im rein elektromotorischen Betrieb des in der Figur 2 gezeigten Getriebes 1 können bis zu 8 elektromotorische Gänge geschaltet werden, das heißt die folgenden zwei Direkt-Gänge EM1, EM2 und die sechs Verwindungs-Gänge EM3 bis EM8:
So ist im Direkt-Gang EM1 die Kupplung K1 betätigt und das Schaltelement SE-D nach links geschaltet. Im Direkt-Gang EM2 ist die Kupplung K2 betätigt und das Schaltelement SE-E nach links geschaltet. Im elektromotorischen Verwindungs-Gang EM3 ist die Kupplung K1 betätigt und SE-D nach rechts geschaltet. Im Verwindungs-Gang EM4 ist die Kupplung K1 betätigt und SE-F nach rechts geschaltet sowie SE-H nach links geschaltet. Im Verwindungs-Gang E5 ist die Kupplung K1 betätigt, SE-F nach rechts geschaltet sowie SE-H nach rechts geschaltet. Im Verwindungs-Gang EM6 ist die Kupplung K2 betätigt sowie SE-E nach rechts geschaltet. Im Verwindungs-Gang EM7 ist die zweite Kupplung K2 betätigt, SE-F nach links geschaltet sowie SE-H nach links geschaltet. Im Verwindungs-Gang EM8 ist die Kupplung K2 betätigt, SE-F nach links geschaltet sowie SE-H nach rechts geschaltet.

Aus den obigen verbrennungsmotorischen Gängen VM1 bis VM10 und den elektromotorischen Gängen EM1 bis EM8 können in Kombination bis zu 28 hybridische Gänge realisiert werden, in denen elektromotorische und verbrennungsmotorische Gänge in Kombination geschaltet sind.

Nachfolgend sind spezielle Fahrbetriebsarten hervorgehoben, die mittels des in der Figur 2 gezeigten Getriebes realisierbar sind:
So ist mit der in der Figur 2 gezeigten Getriebestruktur ein Standladen der Elektromaschine 11 ermöglicht, sofern das Fahrzeug im Fahrzeugstillstand ist, zum Beispiel an einer Ampel oder im Stau. In diesem Fall kann beispielhaft das Schaltelement SE-F nach rechts betätigt werden, um die Brennkraftmaschinen-Welle 3 mit der ersten Hybrid-Radebene E1 zu verbinden. Zugleich wird die Kupplung K1 (bestehend aus dem Außenlamellenträger 45 und dem Innenlamellenträger 49) geschlossen, um die erste Hybrid-Radebene E1 mit der Elektromaschinen-Welle 9 zu verbinden. Dadurch ist ein Lastpfad L1 gebildet, der einen Momentenfluss von der Brennkraftmaschine 7 über die Brennkraftmaschinen-Welle 3, die erste Hybrid-Radebene E1, die geschlossene Kupplung K1 bis zur Elektromaschine 11 leitet.

Zudem ist mit Hilfe der Elektromaschine 11 ein Brennkraftmaschinen-Start durchführbar. Die Elektromaschine 11 kann die Brennkraftmaschine 7 über einen Lastpfad L2 starten, bei dem beispielhaft die zweite Kupplung K2 (bestehend aus dem Außenlamellenträger 45 und dem Innenlamellenträger 47) geschlossen ist und das Schaltelement SE-F nach links betätigt ist.

Ferner kann in der Figur 2 ein Schaltvorgang zwischen den verbrennungsmotorischen Gängen 1 bis 6 mit Hilfe der Elektromaschine 11 zugkraftunterbrechungsfrei erfolgen, und zwar z.B. mit Hilfe der elektromotorischen Gänge EM1, EM2, die beim verbrennungsmotorischen Schalten als Stützgänge wirken. Ein solcher Schaltvorgang wird mit einem Öffnen der Trennkupplung 4 gestartet, um die Brennkraftmaschine 7 vom Getriebe 1 zu entkoppeln. Ein eingelegter elektromotorischer Stützgang stellt während des zwischen den verbrennungsmotorischen Gängen erfolgenden Schaltvorgangs einen Stützlastpfad bereit, der von der Elektromaschine 11 zur Antriebsseite verläuft. Während des Schaltvorgangs (das heißt die Brennkraftmaschine 7 ist mittels der Trennkupplung 4 vom Antriebsstrang abgekoppelt) kann somit die Elektromaschine 11 ein Antriebsmoment erzeugen, das über den Stütz-Lastpfad zur Abtriebsseite übertragen wird.

Der obige Sachverhalt ist nachfolgend anhand eines zugkraftunterbrechungsfreien Schaltvorgangs zwischen dem dritten und vierten verbrennungsmotorischen Gang erläutert, bei dem der elektromotorische zweite Gang EM2 als Stützgang wirkt: So ist im Getriebe 1 der Figur 2 im verbrennungsmotorischen dritten Gang VM3 das Schaltelement SE-F nach rechts und das Schaltelement SE-D nach links geschaltet. Dadurch verläuft ein Lastpfad von der Brennkraftmaschine 7, dem Teilgetriebe T1, der Abtriebswelle 17 bis zum abtriebsseitigen Stirnradtrieb St, während das Teilgetriebe T2 deaktiviert (stillgelegt) ist. Zu Beginn des Schaltvorgangs wird die Trennkupplung 4 gelöst und das Schaltelement SE-D in seine Neutralstellung geschaltet. Zudem wird der als Stützgang wirkende elektromotorische Gang EM2 eingelegt, das heißt die Lamellenkupplung K2 geschlossen und das Schaltelement SE-E nach links geschaltet, und die Elektromaschine 11 hochgefahren. Dadurch erfolgt eine Lastübertragung von der Elektromaschine 11 zur Abtriebsseite, bei der die Elektromaschine 11 ein beliebig einstellbares Moment erzeugt.

Der Schaltvorgang in den Zielgang VM4 wird fortgesetzt, indem das Schaltelement SE-D von seiner Neutralstellung nach rechts geschaltet wird. Damit ist ein Lastpfad von der Brennkraftmaschine 7 über das Schaltelement SE-F, die Radebene V4, das Schaltelement SE-D sowie die Abtriebswelle 17 bis zum abtriebsseitigen Stirnradtrieb St vorbereitet. Zum Ende des Schaltvorgangs wird die Trennkupplung 4 wieder geschlossen, das heißt die Brennkraftmaschine 7 zugeschaltet, sowie die Elektromaschine 11 wieder heruntergefahren, so dass der Zielgang VM4 geschaltet ist und abermals eine Lastübertragung von der Brennkraftmaschine 7 zur Abtriebsseite erfolgt.

Von daher kann im Getriebe 1 der Figur 2 jede Schaltung mittels eines elektromotorischen Stützgangs gestützt werden, und zwar im Unterschied zur Figur 1, in der speziell ein Schaltvorgang zwischen dem verbrennungsmotorischen dritten Gang VM3 und dem verbrennungsmotorischen vierten Gang VM4, das heißt zwischen den Hybrid-Radebenen E1 und E2, nicht mittels eines elektromotorischen Gangs gestützt werden kann. In dem in der Figur 1 gezeigten Getriebe 1 kann während des obigen Schaltvorgangs von der Elektromaschine 11 kein Stütz-Lastpfad bereitgestellt werden, da sowohl die Brennkraftmaschine 7 als auch die Elektromaschine 11 über ein gemeinsames Schaltelement SE-B auf die Abtriebswelle 17 abtreiben. Somit ist in der Figur 1 kein zugkraftunterbrechungsfreies Schalten zwischen dem dritten und vierten verbrennungsmotorischen Gang möglich.

Zudem ist mittels des in der Figur 2 gezeigten Getriebes 1 ein elektromotorisches Anfahren aus dem Fahrzeugstillstand oder ein Boost-Betrieb ermöglicht, bei der für einzelne verbrennungsmotorische Gänge mehrere elektromotorische Gänge zum Boosten zur Verfügung stehen.

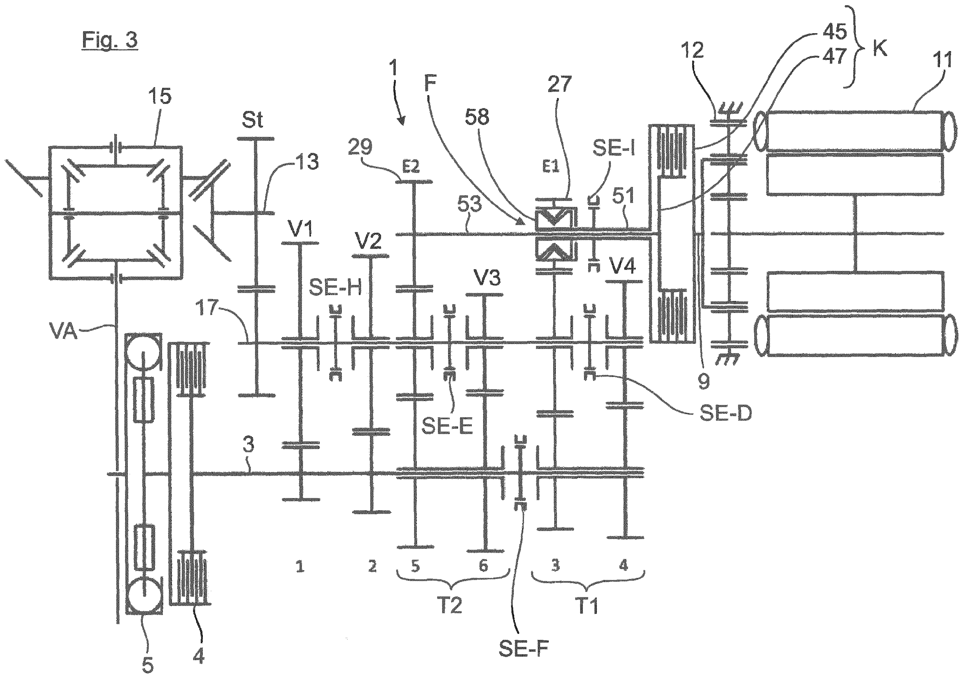

Anhand der folgenden Figuren 3 bis 5 sind Abwandlungen des in der Figur 3 gezeigten Getriebes 1 beschrieben:
So sind in der Figur 3 die beiden elektromaschinenseitigen Zahnräder 27, 29 der Hybrid-Radebenen E1, E2 nicht über eine Doppelkupplung (Figur 2) oder über eine Doppelsynchronisierung (Figur 2) mit der Elektromaschinen-Welle 9 verbindbar, sondern anstelle dessen mittels einer Freilaufkupplung F und einer Lamellenkupplung K. Die Lamellenkupplung K weist einen Außenlamellenträger 45 auf, der sowohl an der Elektromaschinen-Welle 9 als auch an der Hohlwelle 51 drehfest angebunden ist. Der Außenlamellenträger 45 wirkt auf einen Innenlamellenträger 47. Dieser ist zusammen mit dem Zahnrad 29 der Hybrid-Ebene 1 auf der Vollwelle 53 drehfest angeordnet, die sich koaxial durch die Hohlwelle 51 erstreckt. Das elektromaschinenseitige Zahnrad 27 der ersten Hybridradebene E1 ist über die Freilaufkupplung F mit der Hohlwelle 51 verbindbar. Der Freilaufkupplung F ist ein Schaltelement SE-I zugeordnet, das in zwei Betriebsstellungen schaltbar ist: In der gezeigten Betriebsstellung ist eine Drehmomentübertragung von der Elektromaschinen-Welle 9 über den Außenlamellenträger 45 und über die Hohlwelle 51 in Richtung auf das elektromaschinenseitige Zahnrad 27 der ersten Hybrid-Radebene E1 ermöglicht und in Gegenrichtung die Freilauffunktion aktiviert, das heißt eine Drehmomentübertragung unterbunden. Sofern also die mit der Hohlwelle 51 verbundene Freilaufkupplungs-Innenseite 58 schneller dreht als das elektromaschinenseitige Zahnrad 27, treibt die Hohlwelle 51 das Zahnrad 27 an. In einer zweiten Betriebsstellung ist das Schaltelement SE-I in der Figur 3 nach links geschaltet. In diesem Fall ist eine Drehmomentübertragung in beiden Richtungen ermöglicht. Sowohl in der Figur 3 als auch in der Figur 2 sind die elektromotorischen Gänge lastschaltbar, während in der Figur 1 die elektromotorischen Gänge nicht lastschaltbar sind.

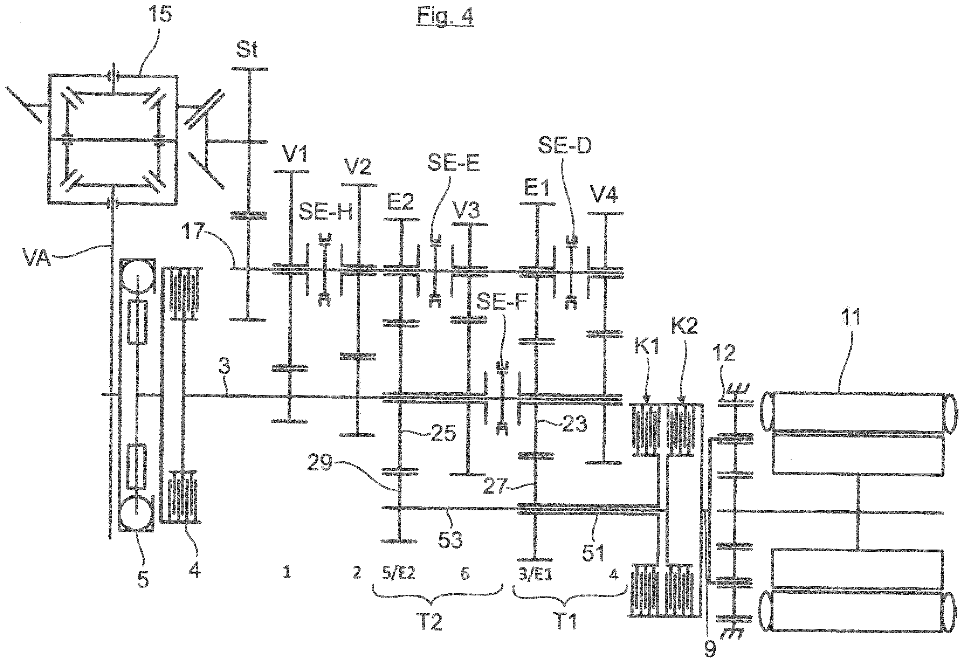

In der Figur 4 ist die Elektromaschine 11 nicht mehr abtriebsseitig an das Getriebe 1 angebunden (wie in den Figuren 1 bis 3), sondern antriebsseitig an das Getriebe 1 angebunden. Bei einer solchen antriebsseitigen Anbindung kämmen die elektromaschinenseitigen Zahnräder 27, 29 der Hybrid-Radebenen E1 und E2 nicht mehr mit den abtriebsseitigen Zahnrädern 19, 21 der Hybrid-Radebenen E1 und E2, sondern mit den antriebsseitigen Zahnrädern 23, 25 der Hybrid-Radebenen E1 und E2.

In den Figuren 1 bis 4 ist ein elektromotorischer Rückwärtsgang bereitgestellt, bei dem die Elektromaschine 11 in umgekehrter Richtung zu betreiben ist.

## Patentansprüche

1. Hybridantriebsstrang für ein hybridgetriebenes Fahrzeug, mit einem mittels Schaltelemente in unterschiedliche Übersetzungsstufen umschaltbaren Getriebe (1), das über eine Brennkraftmaschinen-Welle (3) mit einer Brennkraftmaschine (7), über eine Elektromaschinen-Welle (9) mit einer Elektromaschine (11) sowie über eine Ausgangswelle (13) mit zumindest einer Fahrzeugachse (VA) trieblich verbindbar ist, wobei die Brennkraftmaschinen-Welle (3) und eine mit der Ausgangswelle (13) trieblich verbundene Abtriebswelle (17) über Stirnzahnradsätze verbindbar sind, die mittels der Schaltelemente schaltbar sind und jeweils Radebenen (V1 bis V4, E1, E2) bilden, wobei die Radebenen (V1 bis V4, E1, E2) eine erste und eine zweite Hybrid-Radebene (E1, E2) aufweisen, die jeweils zusätzlich mit der Elektromaschinen-Welle (9) trieblich verbindbar sind, und wobei die Elektromaschine (11) unter Bildung eines ersten Lastpfads (L1) über die erste Hybrid-Radebene (E1) mit der Brennkraftmaschine (7) verbindbar ist und unter Bildung eines zweiten Lastpfads (L2) über die zweite Hybrid-Radebene (E2) mit der Brennkraftmaschine (7) verbindbar ist, während gleichzeitig die mit der Ausgangswelle (13) verbundene Abtriebswelle (17) vom jeweiligen Lastpfad (L1, L2) entkoppelt ist, wobei die erste und zweite Hybrid-Radebene (E1, E2) jeweils ein auf der Abtriebswelle (17) angeordnetes abtriebsseitiges Zahnrad (19, 21), ein auf der Brennkraftmaschinen-Welle (3) angeordnetes antriebsseitiges Zahnrad (23, 25) und ein zur Elektromaschinen-Welle (9) koaxial angeordnetes elektromaschinenseitiges Zahnrad (27, 29) aufweist, wobei das auf der Abtriebswelle (17) angeordnete abtriebsseitige Zahnrad (19, 21) der ersten und zweiten Hybrid-Radebene (E1, E2) ein Loszahnrad ist, das mittels eines Schaltelements (SE-B) mit der Abtriebswelle (17) koppelbar oder davon abkoppelbar ist, und wobei das auf der Brennkraftmaschinen-Welle (3) angeordnete antriebsseitige Zahnrad (23, 25) der ersten und zweiten Hybrid-Radebene (E1, E2) ein Loszahnrad ist, das mittels eines Schaltelements (SE-C) mit der Brennkraftmaschinen-Welle (3) koppelbar ist, **dadurch gekennzeichnet, dass** das elektromaschinenseitige Zahnrad (27, 29) als Loszahnrad drehgelagert ist und mittels einem Schaltelement (SE-A) von der Elektromaschinen-Welle (9) abkoppelbar ist oder damit koppelbar ist, und dass die beiden Hybrid-Radebenen (E1, E2) Bestandteile eines gemeinsamen Teilgetriebes (T) sind, das während des Getriebe-Betriebs stilllegbar ist, das heißt von der Brennkraftmaschine (7) und von der Abtriebsseite abkoppelbar ist, und dass im Teilgetriebe (T) die auf der Brennkraftmaschinen-Welle (3) angeordneten antriebsseitigen Loszahnräder (23, 25) der beiden Hybridradebenen (E1, E2) gemeinsam auf einer Hohlwelle (31) drehfest angeordnet sind, die koaxial auf der Brennkraftmaschinen-Welle (3) drehgelagert ist und über genau ein Schaltelement (SE-C) mit der Brennkraftmaschinen-Welle (3) koppelbar ist.

2. Antriebsstrang nach Anspruch 1, **dadurch gekennzeichnet, dass** das auf der Elektromaschinen-Welle (9) angeordnete Schaltelement (SE-A) beidseitig schaltbar ist und in Axialrichtung zwischen den elektromaschinenseitigen Loszahnrädern (27, 29) der beiden Hybrid-Radebenen (E1, E2) angeordnet ist, wobei das Schaltelement (SE-A) in einer Neutralstellung von den beiden Hybrid-Radebenen (E1, E2) abgekoppelt ist und das Schaltelement (SE-A) entweder in einer ersten Schaltstellung das Loszahnrad (27) der ersten Hybrid-Radebene (E1) mit der Elektromaschinen-Welle (9) koppelt oder in einer zweiten Schaltstellung das Loszahnrad (29) der zweiten Hybrid-Radebene (E2) mit der Elektromaschinen-Welle (9) koppelt.

3. Antriebsstrang nach einem der Ansprüche 1 oder 2, **dadurch gekennzeichnet, dass** die Elektromaschinen-Welle (9) frei von drehfest darauf angeordneten Festzahnräder der die Radebenen bildenden Stirnzahnradsätze ist.

4. Antriebsstrang nach einem der vorhergehenden Ansprüche, **dadurch gekennzeichnet, dass** die Abtriebswelle (17) über eine Stirnradstufe (St) mit der Ausgangswelle (13) verbunden ist, und dass sämtliche Radebenen (V1 bis V4, E1, E2) in der Axialrichtung zwischen der Stirnradstufe (St) und der Elektromaschine (11) angeordnet sind, und/oder dass die erste und zweite Hybrid-Radebene (E1, E2) unmittelbar axial benachbart an der Elektromaschine (11) angeordnet sind.

5. Antriebsstrang nach einem der vorhergehenden Ansprüche, **dadurch gekennzeichnet, dass** das auf der Abtriebswelle (17) angeordnete Schaltelement (SE-B) beidseitig schaltbar ist und in Axialrichtung zwischen den abtriebsseitigen Loszahnrädern (19, 21) der beiden Hybrid-Radebenen (E1, E2) angeordnet ist, wobei das Schaltelement (SE-B) entweder in einer ersten Schaltstellung das abtriebsseitige Loszahnrad (19) der ersten Hybrid-Radebene (E1) mit der Abtriebswelle (17) koppelt oder in einer zweiten Schaltstellung das abtriebsseitige Loszahnrad (21) der zweiten Hybrid-Radebene (E2) mit der Abtriebswelle (17) koppelt.

6. Hybridantriebsstrang für ein hybridgetriebenes Fahrzeug, mit einem mittels Schaltelemente in unterschiedliche Übersetzungsstufen umschaltbaren Getriebe (1), das über eine Brennkraftmaschinen-Welle (3) mit einer Brennkraftmaschine (7), über eine Elektromaschinen-Welle (9) mit einer Elektromaschine (11) sowie über eine Ausgangswelle (13) mit zumindest einer Fahrzeugachse (VA) trieblich verbindbar ist, wobei die Brennkraftmaschinen-Welle (3) und eine mit der Ausgangswelle (13) trieblich verbundene Abtriebswelle (17) über Stirnzahnradsätze verbindbar sind, die mittels der Schaltelemente schaltbar sind und jeweils Radebenen (V1 bis V4, E1, E2) bilden, wobei die Radebenen (V1 bis V4, E1, E2) eine erste und eine zweite Hybrid-Radebene (E1, E2) aufweisen, die jeweils zusätzlich mit der Elektromaschinen-Welle (9) trieblich verbindbar sind, und wobei die Elektromaschine (11) unter Bildung eines ersten Lastpfads (L1) über die erste Hybrid-Radebene (E1) mit der Brennkraftmaschine (7) verbindbar ist und unter Bildung eines zweiten Lastpfads (L2) über die zweite Hybrid-Radebene (E2) mit der Brennkraftmaschine (7) verbindbar ist, während gleichzeitig die mit der Ausgangswelle (13) verbundene Abtriebswelle (17) vom jeweiligen Lastpfad (L1, L2) entkoppelt ist, wobei die erste und zweite Hybrid-Radebene (E1, E2) jeweils ein auf der Abtriebswelle (17) angeordnetes abtriebsseitiges Zahnrad (19, 21), ein auf der Brennkraftmaschinen-Welle (3) angeordnetes antriebsseitiges Zahnrad (23, 25) und ein zur Elektromaschinen-Welle (9) koaxial angeordnetes elektromaschinenseitiges Zahnrad (27, 29) aufweist, wobei das auf der Abtriebswelle (17) angeordnete abtriebsseitige Zahnrad (19, 21) der ersten und zweiten Hybrid-Radebene (E1, E2) ein Loszahnrad ist, und wobei das auf der Brennkraftmaschinen-Welle (3) angeordnete antriebsseitige Zahnrad (23, 25) der ersten und zweiten Hybrid-Radebene (E1, E2) ein Loszahnrad ist, **dadurch gekennzeichnet, dass** das elektromaschinenseitige Zahnrad (27, 29) als Loszahnrad drehgelagert ist und mittels einem Schaltelement (K1, K2; K, F) von der Elektromaschinen-Welle (9) abkoppelbar ist oder damit koppelbar ist, dass jeder Hybrid-Radebene (E1, E2) jeweils eine weitere Radebene (V3, V4) unmittelbar benachbart ist, die gegenüber der Elektromaschinen-Welle (9) anbindungsfrei ist und ein auf der Abtriebswelle (17) drehgelagertes abtriebsseitiges Loszahnrad (33, 39) aufweist, das mittels eines Schaltelements (SE-D, SE-E) mit der Abtriebswelle (17) koppelbar ist, und dass das auf der Abtriebswelle (17) angeordnete Schaltelement (SE-D, SE-E) beidseitig schaltbar ist und in Axialrichtung zwischen den auf der Abtriebswelle (17) drehgelagerten abtriebsseitigen Loszahnrädern (19, 21, 33, 39) der jeweiligen Hybrid-Radebene (E1, E2) und der zugeordneten weiteren Radebene (V3, V4) angeordnet ist, wobei das Schaltelement (SE-D, SE-E) in einer Neutralstellung von der Hybrid-Radebene (E1, E2) und von der weiteren Radebene (V3, V4) abgekoppelt ist und das Schaltelement (SE-D, SE-E) entweder in einer ersten Schaltstellung das abtriebsseitige Loszahnrad (33, 39) der weiteren Radebene (V3, V4) mit der Abtriebswelle (17) koppelt oder in einer zweiten Schaltstellung das abtriebsseitige Loszahnrad (19, 21) der Hybrid-Radebene (E1, E2) mit der Abtriebswelle (17) koppelt, und dass die erste Hybrid-Radebene (E1) mit der zugeordneten weiteren Radebene (V4) ein erstes Teilgetriebe (T1) bildet, und dass die zweite Hybrid-Radebene (E2) mit der zugeordneten weiteren Radebene (V3) ein zweites Teilgetriebe (T2) bildet, und dass die Teilgetriebe (T1, T2) während des Getriebe-Betriebs stilllegbar sind, das heißt vom Antriebsstrang abkoppelbar ist, und dass in jedem der Teilgetriebe (T1, T2) die weitere Radebene (V3, V4) ein auf der Brennkraftmaschinen-Welle (3) drehgelagertes antriebsseitiges Loszahnrad (35, 41) aufweist, das mittels eines Schaltelements (SE-F) mit der Brennkraftmaschinen-Welle (3) koppelbar ist, und dass die auf der Brennkraftmaschinen-Welle (3) drehgelagerten Loszahnräder (35, 41, 23, 25) der Hybrid-Radebene (E1, E2) und der weiteren Radebene (V3, V4) auf jeweils einer abtriebsseitigen Hohlwelle (37, 43) drehfest angeordnet sind, die auf der Brennkraftmaschinen-Welle (3) koaxial drehgelagert ist und über genau ein Schaltelement (SE-F) mit der Brennkraftmaschinen-Welle (3) koppelbar ist.

7. Antriebsstrang nach Anspruch 6, **dadurch gekennzeichnet, dass** das auf der Brennkraftmaschinen-Welle (3) angeordnete Schaltelement (SE-F) beidseitig schaltbar ist und in Axialrichtung zwischen den antriebsseitigen Hohlwellen (37, 43) der beiden Teilgetriebe (T1, T2) angeordnet ist, wobei das Schaltelement (SE-F) in einer Neutralstellung von beiden Hohlwellen (37, 43) abgekoppelt ist und das Schaltelement (SE-F) entweder in einer ersten Schaltstellung die antriebsseitige Hohlwelle (37) des ersten Teilgetriebes (T1) mit der Brennkraftmaschinen-Welle (3) koppelt oder in einer zweiten Schaltstellung die antriebsseitige Hohlwelle (43) des zweiten Teilgetriebes (T2) mit der Brennkraftmaschinen-Welle (3) koppelt.

8. Antriebsstrang nach einem der vorhergehenden Ansprüche, **dadurch gekennzeichnet, dass** die Elektromaschinen-Welle (9) über ein erstes Schaltelement (F; K1) mit der ersten Hybridebene (E1) und mit einem zweiten Schaltelement (K; K2) mit der zweiten Hybridebene (E2) verbunden ist.

9. Antriebsstrang nach Anspruch 8, **dadurch gekennzeichnet, dass** das elektromaschinenseitige Zahnrad (27) der ersten Hybridebene (E1) auf einer zur Elektromaschinen-Welle (9) koaxialen Hohlwelle (51), drehfest angeordnet, ist, und dass die Hohlwelle (51) über das erste Schaltelement (K1) mit der Elektromaschinen-Welle (9) verbindbar ist, und dass das Zahnrad (29) der zweiten Hybridebene (E2) auf einer koaxial durch die Hohlwelle (51) geführten Vollwelle (53) drehfest angeordnet ist, und dass die Vollwelle (53) über das zweite Schaltelement (K2; K), mit der Elektromaschinen-Welle (9) verbindbar ist.

10. Antriebsstrang nach einem der Ansprüche 8 oder 9, **dadurch gekennzeichnet, dass** das zweite Schaltelement eine Kupplung (K) ist, mit der die Vollwelle (53) mit der Elektromaschinen-Welle (9) verbindbar ist, wobei der Außenlamellenträger (45) der Kupplung (K) sowohl an der Elektromaschinen-Welle (9) als auch an der Hohlwelle (51) fest angebunden ist.

## Claims

1. Hybrid drive train for a hybrid-drive vehicle, having a transmission (1) which can be switched using switch elements into different gear ratios, which transmission can be connected drivingly via an internal combustion engine shaft (3) to an internal combustion engine (7), via an electric machine shaft (9) to an electric machine (11) as well as via an output shaft (13) to at least one vehicle axis (VA), wherein the internal combustion engine shaft (3) and a driven shaft (17), connected drivingly to the output shaft (13), can be connected via spur gear sets, which can be switched by means of the switching elements and form in each case wheel planes (V1 to V4, E1, E2), wherein the wheel planes (V1 to V4, E1, E2) have a first and a second hybrid wheel plane (E1, E2), which can be drivingly connected in each case additionally to the electric machine shaft (9), and wherein the electric machine (11) can be connected to the internal combustion engine (7) via the first hybrid wheel plane (E1), forming a first load path (L1), and can be connected to the internal combustion engine (7) via the second hybrid wheel plane (E2), forming a second load path (L2), while at the same time the driven shaft (17) connected to the output shaft (13) is decoupled from the respective load path (L1, L2), wherein the first and second hybrid wheel planes (E1, E2) have in each case respectively an output-side gearwheel (19, 21) arranged on the driven shaft (17), a drive-side gearwheel (23, 25) arranged on the internal combustion engine shaft (3) and an electric-machine-side gearwheel (27, 29) arranged coaxially to the electric machine shaft (9), wherein the output-side gearwheel (19, 21), arranged on the driven shaft (17), of the first and second hybrid wheel plane (E1, E2) is a loose gear, which can be coupled with or uncoupled from the driven shaft (17) by means of a switching element (SE-B), and wherein the drive-side gearwheel (23, 25), arranged on the internal combustion engine shaft (3), of the first and second hybrid wheel plane (E1, E2) is a loose gear which can be coupled to the internal combustion engine shaft (3) by means of a switching element (SE-C), **characterised in that** the electric machine-side gearwheel (27, 29) is rotationally mounted as a loose gear and can be decoupled from or coupled with the electric machine shaft (9) by means of a switching element (SE-A), and that the two hybrid wheel planes (E1, E2) are components of a common partial transmission (T) which can be shut down during the transmission operation, that is, can be decoupled from the internal combustion engine (7) and from the output side, and that in the partial transmission (T) the drive-side loose gears (23, 25), arranged on the internal combustion engine shaft (3), of the two hybrid wheel planes (E1, E2) are arranged non-rotationally together on a hollow shaft (31) which is rotationally mounted coaxially on the internal combustion engine shaft (3) and is can be coupled with the internal combustion engine shaft (3) via precisely one switching element (SE-C).

2. Drive train according to claim 1, **characterised in that** the switching element (SE-A) arranged on the electric machine shaft (9) can be switched on both sides and is arranged in axial direction between the electric machine-side loose gears (27, 29) of the two hybrid wheel planes (E1, E2), wherein in a neutral position the switching element (SE-A) is decoupled from the two hybrid wheel planes (E1, E2) and the switching element (SE-A) either, in a first switching position, couples the loose gear (27) of the first hybrid wheel plane (E1) with the electric machine shaft (9) or, in a second switching position, couples the loose gear (29) of the second hybrid wheel plane (E2) with the electric machine shaft (9).

3. Drive train according to any of claims 1 or 2, **characterised in that** the electric machine shaft (9) is free of fixed gears, arranged non-rotationally thereon, of the spur gear sets forming the wheel planes.

4. Drive train according to any of the preceding claims, **characterised in that** the driven shaft (17) is connected via a spur gear stage (St) to the output shaft (13), and that all wheel planes (V1 to V4, E1, E2) are arranged in the axial direction between the spur gear stage (St) and the electric machine (11), and/or that the first and second hybrid wheel planes (E1, E2) are arranged immediately axially adjacent to the electric machine (11).

5. Drive train according to any of the preceding claims, **characterised in that** the switching element (SE-B) arranged on the driven shaft (17) can be switched on both sides and is arranged in axial direction between the output-side loose gears (19, 21) of the two hybrid wheel planes (E1, E2), wherein the switching element (SE-B) either, in a first switching position, couples the output-side loose gear (19) of the first hybrid wheel plane (E1) with the driven shaft (17) or, in a second switching position, couples the output-side loose gear (21) of the second hybrid wheel plane (E2) with the driven shaft (17).

6. Drive train for a hybrid-drive vehicle, having a transmission (1) which can be switched using switch elements into different gear ratios, which transmission can be connected drivingly via an internal combustion engine shaft (3) to an internal combustion engine (7), via an electric machine shaft (9) to an electric machine (11) as well as via an output shaft (13) to at least one vehicle axis (VA), wherein the internal combustion engine shaft (3) and a driven shaft (17), connected drivingly to the output shaft (13), can be connected via spur gear sets, which can be switched by means of the switching elements and form in each case wheel planes (V1 to V4, E1, E2), wherein the wheel planes (V1 to V4, E1, E2) have a first and a second hybrid wheel plane (E1, E2), which can be drivingly connected in each case additionally to the electric machine shaft (9), and wherein the electric machine (11) can be connected to the internal combustion engine (7) via the first hybrid wheel plane (E1), forming a first load path (L1), and can be connected to the internal combustion engine (7) via the second hybrid wheel plane (E2), forming a second load path (L2), while at the same time the driven shaft (17) connected to the output shaft (13) is decoupled from the respective load path (L1, L2), wherein the first and second hybrid wheel planes (E1, E2) have in each case respectively an output-side gearwheel (19, 21) arranged on the driven shaft (17), a drive-side gearwheel (23, 25) arranged on the internal combustion engine shaft (3) and an electric-machine-side gearwheel (27, 29) arranged coaxially to the electric machine shaft (9), wherein the output-side gearwheel (19, 21), arranged on the driven shaft (17), of the first and second hybrid wheel plane (E1, E2) is a loose gear, and wherein the drive-side gearwheel (23, 25), arranged on the internal combustion engine shaft (3), of the first and second hybrid wheel plane (E1, E2) is a loose gear, **characterised in that** the electric machine-side gearwheel (27, 29) is rotationally mounted as a loose gear and can be decoupled from or coupled with the electric machine shaft (9) by means of a switching element (K1, K2; K, F), that each hybrid wheel plane (E1, E2) is immediately adjacent in each case to one further wheel plane (V3, V4) which is binding-free with respect to the electric machine shaft (9) and has a drive-side loose gear (33, 39) rotationally mounted on the driven shaft (17), which loose gear can be coupled with the driven shaft (17) by means of a switching element (SE-D, SE-E), and that the switching element (SE-D, SE-E) arranged on the driven shaft (17) can be switched on both sides and is arranged in axial direction between the output-side loose gears (19, 21, 33, 39), rotationally mounted on the driven shaft (17), of the respective hybrid wheel plane (E1, E2) and the assigned further wheel plane (V3, V4), wherein in a neutral position the switching element (SE-D, SE-E) is decoupled from the hybrid wheel plane (E1, E2) and from the further wheel plane (V3, V4) and the switching element (SE-D, SE-E) either, in a first switching position, couples the output-side loose gear (33, 39) of the further wheel plane (V3, V4) with the driven shaft (17) or, in a second switching position, couples the output-side loose gear (19, 21) of the hybrid wheel plane (E1, E2) with the driven shaft (17), and that the first hybrid wheel plane (E1) forms with the assigned further wheel plane (V4) a first partial transmission (T1), and that the second hybrid wheel plane (E2) forms with the assigned further wheel plane (V3) a second partial transmission (T2), and that the partial transmissions (T1, T2) can be shut down during the transmission operation, i.e. can be decoupled from the drive train, and that in each of the partial transmissions (T1, T2) the further wheel plane (V3, V4) has a drive-side loose gear (35, 41) rotationally mounted on the internal combustion engine shaft (3), which loose gear can be coupled by means of a switching element (SE-F) with the internal combustion engine shaft (3), and that the loose gears (35, 41, 23, 25), rotationally mounted on the internal combustion engine shaft (3), of the hybrid wheel plane (E1, E2) and of the further wheel plane (V3, V4) are non-rotationally mounted on in each case one output-side hollow shaft (37, 43), which is coaxially rotationally mounted on the internal combustion engine shaft (3) and can be coupled via precisely one switching element (SE-F) with the internal combustion engine shaft (3).

7. Drive train according to claim 6, **characterised in that** the switching element (SE-F) arranged on the internal combustion engine shaft (3) can be switched on both sides and is arranged in axial direction between the drive-side hollow shafts (37, 43) of the two partial transmissions (T1, T2), wherein in a neutral position the switching element (SE-F) is decoupled from both hollow shafts (37, 43) and the switching element (SE-F) either, in a first switching position, couples the drive-side hollow shaft (37) of the first partial transmission (T1) with the internal combustion engine shaft (3), or, in a second switching position, couples the drive-side hollow shaft (43) of the second partial transmission (T2) with the internal combustion engine shaft (3).

8. Drive train according to any of the preceding claims, **characterised in that** the electric machine shaft (9) is connected via a first switching element (F; K1) with the first hybrid plane (E1) and with a second switching element (K; K2) with the second hybrid plane (E2).

9. Drive train according to claim 8, **characterised in that** the electric machine-side gearwheel (27) of the first hybrid plane (E1) is non-rotationally arranged on a hollow shaft (51) coaxial to the electric machine shaft (9), and that the hollow shaft (51) can be connected via the first switching element (K1) to the electric machine shaft (9), and that the gearwheel (29) of the second hybrid plane (E2) is arranged non-rotationally on a solid shaft (53) guided coaxially through the hollow shaft (51), and that the solid shaft (53) can be connected via the second switching element (K2; K) to the electric machine shaft (9).

10. Drive train according to any of claims 8 or 9, **characterised in that** the second switching element is a clutch (K) with which the solid shaft (53) can be connected to the electric machine shaft (9), wherein the outer plate carrier (45) of the clutch (K) is fixedly connected both to the electric machine shaft (9) as well as to the hollow shaft (51).

## Revendications

1. Chaîne cinématique hybride pour un véhicule à entraînement hybride, avec une transmission (1) commutable dans différents étages de rapport de transmission au moyen d'éléments de commutation, qui peut être connectée en entraînement à un moteur à combustion interne (7) par l'intermédiaire d'un arbre de moteur à combustion interne (3), à une machine électrique (11) par l'intermédiaire d'un arbre de machine électrique (9) ainsi qu'à au moins un essieu de véhicule (VA) par l'intermédiaire d'un arbre de sortie (13), dans laquelle l'arbre de moteur à combustion interne (3) et un arbre entraîné (17) connecté en entraînement à l'arbre de sortie (13) peuvent être connectés par l'intermédiaire de jeux de pignons droits qui sont commutables au moyen des éléments de commutation et qui forment respectivement des plans de roue (V1 à V4, E1, E2), dans laquelle les plans de roue (V1 à V4, E1, E2) présentent un premier et un second plan de roue hybride (E1, E2), qui en plus peuvent respectivement être connectés en entraînement à l'arbre de machine électrique (9), et dans laquelle la machine électrique (11) peut être connectée au moteur à combustion interne (7) en formant un premier cheminement des charges (L1) par l'intermédiaire du premier plan de roue hybride (E1) et peut être connectée au moteur à combustion interne (7) en formant un second cheminement des charges (L2) par l'intermédiaire du second plan de roue hybride (E2), tandis qu'en même temps, l'arbre entraîné (17) connecté à l'arbre de sortie (13) est découplé du cheminement des charges respectif (L1, L2), dans laquelle le premier et le second plan de roue hybride (E1, E2) présentent respectivement un pignon côté entraîné (19, 21) disposé sur l'arbre entraîné (17), un pignon côté entrée (23, 25) disposé sur l'arbre de moteur à combustion interne (3) et un pignon côté machine électrique (27, 29) disposé coaxialement à l'arbre de machine électrique (9), dans laquelle le pignon côté entraîné (19, 21) du premier et du second plan de roue hybride (E1, E2) est un pignon libre qui peut être couplé à l'arbre entraîné (17) ou découplé de celui-ci au moyen d'un élément de commutation (SE-B), et dans laquelle le pignon (23, 25) côté entraîné du premier et du second plan de roue hybride (E1, E2), disposé sur l'arbre de moteur à combustion interne (3), est un pignon libre qui peut être couplé à l'arbre de moteur à combustion interne (3) au moyen d'un élément de commutation (SE-C), **caractérisée en ce que** le pignon (27, 29) côté machine électrique est monté en rotation en tant que pignon libre et peut être découplé de l'arbre de machine électrique (9) au moyen d'un élément de commutation (SE-A) ou peut être couplé à celui-ci, et **en ce que** les deux plans de roue hybrides (E1, E2) sont des composants d'une transmission partielle commune (T) qui peut être arrêtée pendant le fonctionnement de la transmission, c'est-à-dire peut être découplée du moteur à combustion interne (7) et du côté entraîné, et **en ce que**, dans la transmission partielle (T), les pignons libres (23, 25) côté entraîné, disposés sur l'arbre de moteur à combustion interne (3), des deux plans de roue hybrides (E1, E2) sont disposés en commun de manière non rotative sur un arbre creux (31), qui est monté coaxialement en rotation sur l'arbre de moteur à combustion interne (3) et qui peut être couplé à l'arbre de moteur à combustion interne (3) par l'intermédiaire d'exactement un élément de commutation (SE-C).

2. Chaîne cinématique selon la revendication 1, **caractérisée en ce que** l'élément de commutation (SE-A) disposé sur l'arbre de machine électrique (9) est commutable des deux côtés et est disposé en direction axiale entre les pignons libres (27, 29) côté machine électrique des deux plans de roue hybrides (E1, E2), dans laquelle l'élément de commutation (SE-A) est découplé des deux plans de roue hybrides (E1, E2) dans une position neutre, et l'élément de commutation (SE-A) couple soit dans une première position de commutation le pignon libre (27) du premier plan de roue hybride (E1) à l'arbre de machine électrique (9), soit dans une seconde position de commutation le pignon libre (29) du second plan de roue hybride (E2) à l'arbre de machine électrique (9).

3. Chaîne cinématique selon l'une quelconque des revendications 1 ou 2, **caractérisée en ce que** l'arbre de machine électrique (9) est exempt de pignons fixes des jeux de pignons droits formant les plans de roue disposés dessus de manière non rotative.

4. Chaîne cinématique selon l'une quelconque des revendications précédentes, **caractérisée en ce que** l'arbre entraîné (17) est connecté à l'arbre de sortie (13) par l'intermédiaire d'un étage hélicoïdal (St), et **en ce que** tous les plans de roue (V1 à V4, E1, E2) sont disposés dans la direction axiale entre l'étage hélicoïdal (St) et la machine électrique (11), et/ou **en ce que** les premier et second plans de roue hybrides (E1, E2) sont disposés immédiatement adjacents axialement à la machine électrique (11).

5. Chaîne cinématique selon l'une quelconque des revendications précédentes, **caractérisée en ce que** l'élément de commutation (SE-B) disposé sur l'arbre entraîné (17) est commutable des deux côtés et est disposé en direction axiale entre les pignons libres (19, 21) côté entraîné des deux plans de roue hybrides (E1, E2), dans laquelle l'élément de commutation (SE-B) couple soit dans une première position de commutation le pignon libre (19) côté entraîné du premier plan de roue hybride (E1) à l'arbre entraîné (17), soit dans une seconde position de commutation le pignon libre (21) côté entraîné du second plan de roue hybride (E2) à l'arbre entraîné (17).

6. Chaîne cinématique hybride pour un véhicule à entraînement hybride, avec une transmission (1) commutable dans différents étages de rapport de transmission au moyen d'éléments de commutation, qui peut être connectée en entraînement à un moteur à combustion interne (7) par l'intermédiaire d'un arbre de moteur à combustion interne (3), à une machine électrique (11) par l'intermédiaire d'un arbre de machine électrique (9) ainsi qu'à au moins un essieu de véhicule (VA) par l'intermédiaire d'un arbre de sortie (13), dans laquelle l'arbre de moteur à combustion interne (3) et un arbre entraîné (17) connecté en entraînement à l'arbre de sortie (13) peuvent être connectés par l'intermédiaire de jeux de pignons droits qui sont commutables au moyen des éléments de commutation et qui forment respectivement des plans de roue (V1 à V4, E1, E2), dans laquelle les plans de roue (V1 à V4, E1, E2) présentent un premier et un second plan de roue hybride (E1, E2), qui en plus peuvent respectivement être connectés en entraînement à l'arbre de machine électrique (9), et dans laquelle la machine électrique (11) peut être connectée au moteur à combustion interne (7) en formant un premier cheminement des charges (L1) par l'intermédiaire du premier plan de roue hybride (E1) et peut être connectée au moteur à combustion interne (7) en formant un second cheminement des charges (L2) par l'intermédiaire du second plan de roue hybride (E2), tandis qu'en même temps, l'arbre entraîné (17) connecté à l'arbre de sortie (13) est découplé du cheminement des charges respectif (L1, L2), dans laquelle le premier et le second plan de roue hybride (E1, E2) présentent respectivement un pignon côté entraîné (19, 21) disposé sur l'arbre entraîné (17), un pignon côté entrée (23, 25) disposé sur l'arbre de moteur à combustion interne (3) et un pignon côté machine électrique (27, 29) disposé coaxialement à l'arbre de machine électrique (9), dans laquelle le pignon côté entraîné (19, 21) du premier et du second plan de roue hybride (E1, E2) est un pignon libre, et dans laquelle le pignon (23, 25) côté entraîné du premier et du second plan de roue hybride (E1, E2), disposé sur l'arbre de moteur à combustion interne (3), est un pignon libre, **caractérisée en ce que** le pignon (27, 29) côté machine électrique est monté en rotation en tant que pignon libre et est peut être découplé de l'arbre de machine électrique (9) au moyen d'un élément de commutation (K1, K2 ; K, F) ou peut être couplé à celui-ci, **en ce que** chaque plan de roue hybride (E1, E2) est immédiatement adjacent à un autre plan de roue (V3, V4) qui est exempt de liaison par rapport à l'arbre de machine électrique (9) et qui présente un pignon libre (33, 39) côté entraîné monté en rotation sur l'arbre entraîné (17), qui peut être couplé à l'arbre entraîné (17) au moyen d'un élément de commutation (SE-D, SE-E), et **en ce que** l'élément de commutation (SE-D, SE-E) disposé sur l'arbre entraîné (17) est commutable des deux côtés et est disposé en direction axiale entre les pignons libres (19, 21, 33, 39) du plan de roue hybride respectif (E1, E2) et de l'autre plan de roue associé (V3, V4), dans laquelle l'élément de commutation (SE-D, SE-E) est découplé dans une position neutre du plan de roue hybride (E1, E2) et de l'autre plan de roue (V3, V4) et l'élément de commutation (SE-D, SE-E) couple soit dans une première position de commutation le pignon libre (33, 39) côté entraîné de l'autre plan de roue (V3, V4) avec l'arbre entraîné (17), soit dans une seconde position de commutation le pignon libre (19, 21) du plan de roue hybride (E1, E2) à l'arbre entraîné (17), et **en ce que** le premier plan de roue hybride (E1) forme avec l'autre plan de roue (V4) associé une première transmission partielle (T1), et **en ce que** le second plan de roue hybride (E2) forme avec l'autre plan de roue (V3) associé une seconde transmission partielle (T2), et **en ce que** les transmissions partielles (T1, T2) peuvent être arrêtées pendant le fonctionnement de la transmission, c'est-à-dire découplées de la chaîne cinématique, et **en ce que** dans chacune des transmissions partielles (T1, T2), l'autre plan de roue (V3, V4) présente un pignon libre (35, 41) côté entraîné, monté en rotation sur l'arbre de moteur à combustion interne (3), qui peut être couplé à l'arbre de moteur à combustion interne (3) au moyen d'un élément de commutation (SE-F), et **en ce que** les pignons libres (35, 41, 23, 25) du plan de roue hybride (E1, E2) et de l'autre plan de roue (V3, V4) sont disposés de manière non rotative sur respectivement un arbre creux (37, 43) côté entraîné, qui est monté coaxialement en rotation sur l'arbre de moteur à combustion interne (3) et qui peut être couplé à l'arbre de moteur à combustion interne (3) par l'intermédiaire d'exactement un élément de commutation (SE-F).

7. Chaîne cinématique selon la revendication 6, **caractérisée en ce que** l'élément de commutation (SE-F) disposé sur l'arbre de moteur à combustion interne (3) est commutable des deux côtés et est disposé en direction axiale entre les arbres creux (37, 43) côté entraîné des deux transmissions partielles (T1, T2), dans laquelle l'élément de commutation (SE-F) est découplé des deux arbres creux (37, 43) dans une position neutre, et l'élément de commutation (SE-F) couple soit dans une première position de commutation l'arbre creux côté entraîné (37) de la première transmission partielle (T1) avec l'arbre de moteur à combustion interne (3), soit dans une seconde position de commutation l'arbre creux côté entraîné (43) de la seconde transmission partielle (T2) avec l'arbre de moteur à combustion interne (3).

8. Chaîne cinématique selon l'une quelconque des revendications précédentes, **caractérisée en ce que** l'arbre de machine électrique (9) est connecté au premier plan hybride (E1) par l'intermédiaire d'un premier élément de commutation (F ; K1) et au second plan hybride (E2) par l'intermédiaire d'un second élément de commutation (K ; K2).

9. Chaîne cinématique selon la revendication 8, **caractérisée en ce que** le pignon (27) côté machine électrique du premier plan hybride (E1) est disposé de manière non rotative sur un arbre creux (51) coaxial à l'arbre de machine électrique (9) et **en ce que** l'arbre creux (51) peut être connecté à l'arbre de machine électrique (9) par l'intermédiaire du premier élément de commutation (K1), et **en ce que** le pignon (29) du second plan hybride (E2) est disposé de manière non rotative sur un arbre plein (53) guidé coaxialement à travers l'arbre creux (51), et **en ce que** l'arbre plein (53) est connecté à l'arbre de machine électrique (9) par l'intermédiaire du second élément de commutation (K2 ; K).

10. Chaîne cinématique selon l'une quelconque des revendications 8 ou 9, **caractérisée en ce que** le second élément de commutation est un embrayage (K) permettant de connecter l'arbre plein (53) à l'arbre de machine électrique (9), dans laquelle le support de lamelles extérieur (45) de l'embrayage (K) est solidaire à la fois de l'arbre de machine électrique (9) et de l'arbre creux (51).
